# EUROPEAN PATENT APPLICATION

(11) **EP 3 643 595 A1**
(43) Date of publication of application: **29.04.2020**
(21) Application number: 18201886.1
(22) Date of filing: 23.10.2018
(51) Int. Cl.: B63B 39/04, F03D 3/00, F03D 13/25, F03D 7/02

(54) **GYRO FOR STABILIZING WIND TURBINE MOVEMENTS**

(71) Applicant: Siemens Gamesa Renewable Energy A/S, 7330 Brande (DK)
(72) Inventor: Durup, Johan, 7400 Herning (DK); Larsen, Rene Schau, 7330 Brande (DK); Theisen, Soeren Henneberg, 7430 Ikast (DK)
(74) Representative: Aspacher, Karl-Georg

(57) **Abstract**

A wind turbine (1) comprises:
- a tower (2) extending axially along a longitudinal axis (Z),
- a nacelle (3) and a rotor (5) attached to an upper end of the tower (2),
- a gyroscope (40),
- a controller device (50) for operating the gyroscope (40) for stabilizing a movement and/or an oscillation of the wind turbine (1) with respect to a spatial reference system (60).

## Description

### Field of invention

The present invention relates to a wind turbine equipped with devices for stabilizing a non-operative wind turbine, in particular during installation or maintenance. The present invention further relates to method of stabilizing a non-operative wind turbine during installation or maintenance, in particular during mounting or replacement of a component of the wind turbine.

### Art Background

During service operations on wind turbines, in particular offshore wind turbines, dynamic elements causes the wind turbine to move, thus hindering the execution of the operation or prolonging the task dramatically.
Wind, waves and the tide are factors, which causes the turbine to move in a circular motion and thereby creating hazards to the technicians involved. Such circular motion may be, for example, the rotation of the nacelle around the yaw axis or oscillation of the entire turbine around a vertical or horizontal axis.
Even in very low wind speeds, the circular motion of the wind turbine can make a relative simple operation very complicated, preventing elements to be aligned correctly.

Service operations may include, for example, the exchange of main components, such as gearboxes. When exchanging a gearbox, this needs to be aligned perfectly with the main shaft. This alignment operation is done with the gearbox hanging in the hook of the jack-up vessel crane and the main shaft still connected to the wind turbine. When the wind turbine is in a circular motion, this operation may last six to eight hours of working time, before having a perfect alignment.
This technical problem is not only with regards to the wind. In offshore applications, this issue is also a big problem even if there is no wind, as the tide shifting is enough to cause the same circular motion.
The above described problem has been typically solved so far by patience, i.e. waiting until the perfect moment has appeared and the lifting operation has been performed. Also, different control measures have been attempted to more or less synchronize the movements, such as tag-lines fenders, battery dampers, vortex generators etc. but without major success.
The above described problem may be also experienced when one of the main components of a wind turbine, i.e. rotor, hub, nacelle and generator, has to be exchanged. In such case problems are experienced, which derives from movements of the tower or of the tower-nacelle assembly. The magnitude of the problem is proportional to the height of the tower. Normal solution to avoid resonance on the tower nacelle is to use vortex ropes or wrapping. Wrapping is however normally used once during the turbine first installation and afterwards removed from the turbine.
When replacing the generator of offshore wind turbine of the greatest dimensions it may be required, due to the movements of the wind turbine, to take the whole nacelle including the generator down on a jack-up vessel and to replace the generator on a vessel instead of replacing it up in the air. This causes inconveniences with the available space on the vessel, and it may be necessary to use a larger vessel than that required to perform the replacement directly at the nacelle level on top of the tower. Further, more lifting operations have to be provided off-shore, because of the weight of the nacelle with the generator together, and this mean additional time and cost for vessel rent, in addition to production loss on the turbines.

Therefore, there is still a need to provide an efficient and practical stabilization of a wind turbine during installation or maintenance, which may overcome the above mentioned inconveniences.

### Summary of the invention

This need may be met by the subject matter according to the independent claims. Advantageous embodiments of the present invention are described by the dependent claims.

According to a first aspect of the present invention, it is provided a wind turbine comprising:
- a tower extending axially along a longitudinal axis,
- a nacelle and a rotor attached to an upper end of the tower,
- a gyroscope,
- a controller device for operating the gyroscope for stabilizing a movement and/or an oscillation of the wind turbine with respect to a spatial reference system.
According to a second aspect of the present invention it is provided a method of stabilizing a wind turbine during installation or maintenance comprising the steps of:
- detachably attaching a gyroscope to the wind turbine,
- operating the gyroscope for stabilizing a movement and/or an oscillation of the wind turbine with respect to a spatial reference system.
Advantageously, according to the present invention, the movements and oscillations of the wind turbine and in particular of the tower and nacelle will be eliminated by installing and operating a gyroscope. Costs are reduced dramatically by avoiding the problems above described.

According to embodiments of the invention, the gyroscope may be attached on or inside the nacelle.
According to other embodiments of the invention, the gyroscope may be mounted on or inside the tower.
The gyroscope may be operated in connection with a sensor measuring wind speed and/or wave speed and/or wave height and/or temperature and/or humidity and/or similar parameters. Relating the functioning of the gyroscope to an external parameter, e.g. the wind speed, may help to reach more quickly the stabilization of the wind turbine.
Alternatively, the controller device may be controlled by having input from an operator, e.g. wireless or by wire, by a control panel/switchboard or tablet device or mobile computer or similar.

According to embodiments of the invention, the present invention is particularly used for exchanging one or more components of the wind turbine. In such cases the method of stabilizing the wind turbine further comprises:
- exchanging one or more components of the wind turbine,
- deactivating the gyroscope,
- detaching and removing the gyroscope from the wind turbine. The component of the wind turbine to be exchanged may be a blade and/or a rotor hub and/or electric generator and/or a main shaft and/or main bearing and/or a gearbox.

The present invention may be advantageously applied to both inland and offshore applications. Particularly but not exclusively for inland applications, the spatial reference system may be a fixed geographical reference system, i.e. a reference system which is fixed with respect to a foundation of the wind turbine.
Particularly but not exclusively for offshore applications, the spatial reference system may be fixed with respect to a lifting or a handling device for handling the one or more components of the wind turbine to be exchanged. This may help in reaching the correct alignment during the operations of exchanging one or more components of the wind turbine.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter, also any combination between features relating to different subject matters, in particular between features of the apparatus type claims and features of the method type claims, is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

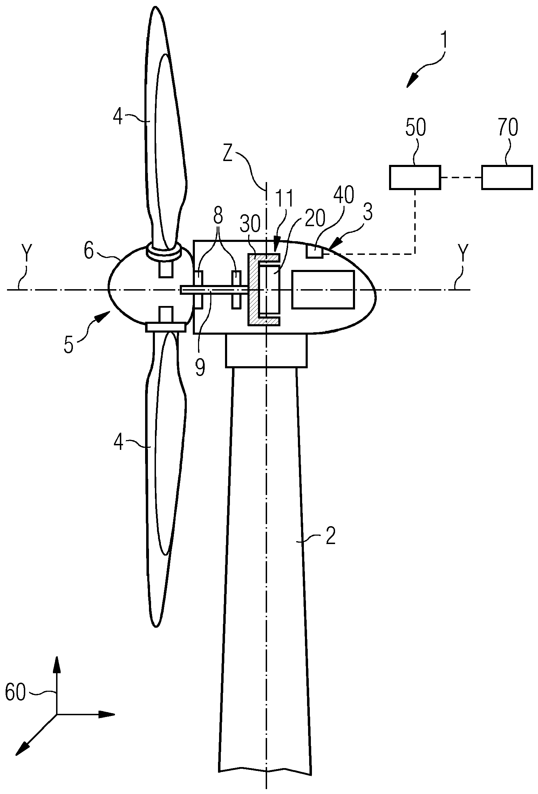

- Figure 1: shows a schematic section of a wind turbine accord-ing to the present invention.

### Detailed Description

**Figure 1** shows a wind turbine 1 comprising a tower 2, which is mounted on a non-depicted foundation. A nacelle 3 is arranged on top of the tower 2.
The wind turbine 1 may be an inland or an offshore wind turbine.
The wind turbine 1 further comprises a wind rotor 5 having a rotor hub 6 and two, three or more blades 4 (in the perspective of Figure 1 only two blades 4 are visible). The wind rotor 5 is rotatable around a rotational longitudinal axis Y. The blades 4 extend radially with respect to the rotational axis Y.
The wind turbine 1 comprises a permanent magnet electric generator 11.
The wind rotor 5 is rotationally coupled with the permanent magnet generator 11 either directly or by means of a rotatable main shaft 9 and through a gearbox (not shown). A schematically depicted bearing assembly 8 is provided in order to hold in place the main shaft 9 and the rotor 5. The rotatable main shaft 9 extends along the rotational axis Y.
The permanent magnet electric generator 11 includes a stator 20 and a rotor 30. The rotor 30 is rotatable with respect to the stator 20 about the rotational axis Y.
The nacelle 3 includes a gyroscope 40. The gyroscope 40 may be installed inside or outside the nacelle 3.
According to other embodiments of the present invention (not shown) the gyroscope 40 may be attached to the tower 2.
The gyroscope is a conventional device used for maintaining a position or orientation with respect to an axis. A gyroscope includes at least a mass rotating around an axis of rotation, which may be oriented as desired. When rotating, the orientation of axis of rotation of the gyroscope is unaffected by tilting or rotation of the element to which the gyroscope is attached, according to the conservation of angular momentum. The wind turbine 1 further includes a controller device 50 (schematically represented by a rectangular block in figure 1) for operating the gyroscope 40.
The gyroscope 40 is operated, e.g. by orienting the axis of rotation of the rotating mass, for stabilizing a movement and/or an oscillation of the wind turbine 1 with respect to a spatial reference system 60 (schematically represented by a Cartesian system in figure 1).
The spatial reference system 60 may be fixed with respect to a foundation of the wind turbine 1, which may be an inland foundation or an offshore floating foundation.
According to other embodiments of the present invention, the spatial reference system 60 is fixed with respect to a lifting or a handling device for handling the one or more components of the wind turbine 1 to be exchanged.
The wind turbine 1 further includes a sensor 70 (schematically represented by a rectangular block in figure 1) for providing an output measured value to the controller device 50. The controller device 50 is configured for operating the gyroscope 40 depending on such output of the sensor 70.
The sensor 70 may be used for measuring wind speed and/or wave speed and/or wave height and/or temperature and/or humidity or similar variables of the local environment of the wind turbine, which may be related to the movements or oscillations of the wind turbine 1, in particular of the nacelle 3 and/or the tower 2.
The connections between the gyroscope 40, the controller device 50 and sensor 70 are schematically represented by dashed lines in figure 1.
The controller device 50 may be controlled automatically through the output of the sensor 70 and/or manually by an operator through a control panel/switchboard or tablet device or mobile computer or similar.

A method of stabilizing the wind turbine 1 during installation or maintenance comprises the following steps:
- detachably attaching the gyroscope 40 to the wind turbine 1 (in particular to the nacelle 3 or the tower 2),
- operating the gyroscope 40 for stabilizing a movement and/or an oscillation of the wind turbine 1 with respect to the spatial reference system 60,
- exchanging one or more components of the wind turbine 1,
- deactivating the gyroscope 40,
- detaching and removing the gyroscope 40 from the wind turbine 1.
The gyroscope 40 is detachably attached inside or outside the nacelle 3.
According to other embodiments of the method of the present invention, the gyroscope 40 is detachably attached inside or outside the tower 2.

Both the gyroscope 40 and the one or more components of the wind turbine 1 to be exchanged may be handles through a crane, e.g. a vessel crane for offshore application, or other similar and conventional lifting and handling devices (not shown in the attached figure 1).
The method above described may be used to exchange the blades 4 the rotor hub 6 the electric generator 11 the main shaft 9, the main bearing 8, the gearbox and any other component of the wind turbine 1, in particular any other component of relevant dimensions of the nacelle 3.

## Claims

1. Wind turbine (1) comprising:
- a tower (2) extending axially along a longitudinal axis (Z),
- a nacelle (3) and a rotor (5) attached to an upper end of the tower (2),
- a gyroscope (40),
- a controller device (50) for operating the gyroscope (40) for stabilizing a movement and/or an oscillation of the wind turbine (1) with respect to a spatial reference system (60).

2. Wind turbine (1) according to claim 1, wherein the wind turbine (1) comprises a sensor (70) for measuring any of a wind speed, wave speed, wave height, temperature and humidity, the controller device (50) being configured for operating the gyroscope (40) depending on an output of the sensor (70).

3. Wind turbine (1) according to claim 1 or 2, wherein gyroscope (40) is attached on the nacelle (3).

4. Wind turbine (1) according to claim 1 or 2, wherein gyroscope (40) is housed inside the nacelle (3) or the tower (2) .

5. Method of stabilizing a wind turbine (1) during installation or maintenance comprising the steps of:
- detachably attaching a gyroscope (40) to the wind turbine (1),
- operating the gyroscope (40) for stabilizing a movement and/or an oscillation of the wind turbine (1) with respect to a spatial reference system (60).

6. Method according to claim 5, the method further includes the steps:
- obtaining a measurement of any of a wind speed, wave speed, wave height, temperature and humidity,
- performing the operating the gyroscope (40) depending on the value of such measurement.

7. Method according to claim 5 or 6, wherein after stabilization of the wind turbine (1) the method further includes the steps of:
- exchanging one or more components of the wind turbine (1),
- deactivating the gyroscope (40),
- detaching and removing the gyroscope (40) from the wind turbine (1).

8. Method according to claim 7, wherein the one or more components of the wind turbine (1) to be exchanged include any of a blade (4), a rotor hub (6), an electric generator (11), a main shaft (9), a main bearing (8) and a gearbox.

9. Method according to any of the claims 6 to 8, spatial reference system (60) is fixed with respect to a foundation of the wind turbine (1).

10. Method according to any of the claims 6 to 8, spatial reference system (60) is fixed with respect to a lifting or a handling device for handling the one or more components of the wind turbine (1) to be exchanged.
